# EUROPÄISCHE PATENTSCHRIFT

(11) **EP 0 687 325 B1**
(45) Veröffentlichungstag und Bekanntmachung des Hinweises auf die Patenterteilung: **31.07.1996**
(21) Anmeldenummer: 94909005.4
(22) Anmeldetag: 19.02.1994
(51) Int. Cl.: D21H 17/54, D21H 17/55, D21H 17/56, D21H 17/57

(54) **WÄSSRIGE PIGMENTANSCHLÄMMUNGEN, VERFAHREN ZU IHRER HERSTELLUNG UND IHRE VERWENDUNG BEI DER HERSTELLUNG VON FÜLLSTOFFHALTIGEM PAPIER**
AQUEOUS PIGMENT SLURRIES, METHOD OF PRODUCING THEM AND THEIR USE IN THE MANUFACTURE OF PAPER CONTAINING FILLERS
BOUES PIGMENTEES AQUEUSES, LEUR PROCEDE DE PRODUCTION ET LEUR UTILISATION DANS LA PRODUCTION DE PAPIER CONTENANT DES CHARGES

(30) Priorität: 03.03.1993 DE 4306608
(43) Veröffentlichungstag der Anmeldung: 20.12.1995
(73) Patentinhaber: BASF Aktiengesellschaft, 67063 Ludwigshafen (DE)
(72) Erfinder: LINHART, Friedrich, D-69123 Heidelberg (DE); MOENCH, Dietmar, D-69469 Weinheim (DE); SCHERR, Guenter, D-67065 Ludwigshafen (DE); REUTHER, Wolfgang, D-69118 Heidelberg (DE); LORENCAK, Primoz, D-67069 Ludwigshafen (DE)
(86) Internationale Anmeldenummer: EP9400480
(87) Internationale Veröffentlichungsnummer: WO9420681

(56) Entgegenhaltungen:
- WO-A-92/14881

## Beschreibung

Die Erfindung betrifft wäßrige Pigmentanschlämmungen, die bis zu 80 Gew.-% eines feinteiligen Pigments dispergiert und 0,1 bis 5 Gew.-% mindestens eines Dispergiermittels enthalten, Verfahren zur Herstellung der wäßrigen Pigmentanschlämmungen und die Verwendung der Pigmentanschlämmungen als Zusatz zum Papierstoff bei der Herstellung von füllstoffhaltigem Papier.

Konzentrierte wäßrige Pigmentanschlämmungen werden in der Technik beispielsweise zur Herstellung von Papierstreichmassen benötigt. Um hochkonzentrierte wäßrige Pigmentanschlämmungen mit einer niedrigen Viskosität herstellen zu können, benötigt man ein Dispergiermittel. Bekannte Dispergiermittel sind beispielsweise niedrigmolekulare Polyacrylsäuren, vgl. EP-A-0 002 771, aus der ein Verfahren zur Herstellung von niedrigmolekularen Polyacrylsäuren bekannt ist.

Aus der US-A-3 945 843 ist außerdem bekannt, daß Copolymerisate aus Methylacrylat und Acrylsäure als Dispergiermittel zur Herstellung von hochkonzentrierten Pigmentanschlämmungen, wie Calciumcarbonat-Slurries, geeignet sind. Die Pigmentanschlämmungen haben Feststoffgehalte von 50 bis 80 Gew.-% und werden zum Beschichten von Papier verwendet.

Aus der EP-A-0 194 621 ist bekannt, daß man zur Herstellung von füllstoffhaltigen Papieren der Stoffsuspension vor der Blattbildung wäßrige Pigmentanschlämmungen zusetzt, die 40 bis 80 Gew.-% eines Pigments mit einem Teilchendurchmesser von kleiner als 2 µm für 40 bis 90 % der Teilchen und 0,1 bis 2 Gew.-%, bezogen auf das Pigment, eines Copolymerisat enthalten, das Ester der Acrylsäure oder Methacrylsäure und mindestens einer ethylenisch ungesättigte C₃-C₅-Carbonsäure einpolymerisiert enthält. Die als Dispergiermittel wirkenden niedrigmolekularen Copolymerisate beeinflussen bei der Herstellung von Papier die Wirksamkeit von Entwässerungsmitteln und Retentionsmitteln praktisch nicht, während niedrigmolekulare Hcmopolymerisate der Acrylsäure die Wirksamkeit von Entwässerungshilfsmitteln und Retentionsmitteln bei der Papierherstellung stark stören.

Aus der nicht vorveröffentlichten Druckschrift WO-A-94 14 873 sind wasserlösliche Kondensationsprodukte bekannt, die erhältlich sind durch Umsetzung von
(a) Polyalkylenpolyaminen, Polyamidoaminen, mit Ethylenimin gepfropften Polyamidoaminen, Polyetheraminen sowie Mischungen der genannten Verbindungen mit
(b) monoethylenisch ungesättigten Carbonsäuren, Salzen, Estern, Amiden oder Nitrilen von monoethylenisch ungesättigten Carbonsäuren, Chlorcarbonsäuren und/oder Glycidylverbindungen der Formel 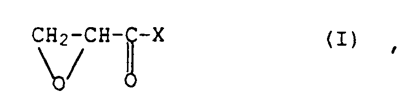 in der
   X = -NH₂, -OMe, -OR
   Me= H, Na, K, Ammonium und
   R = C₁- bis C₄-Alkyl oder C₂- bis C₄-Hydroxyalkyl bedeuten, und
(c) mindestens bifunktionellen Vernetzern, die als funktionelle Gruppe eine Halogenhydrin-, Glycidyl-, Aziridin- oder Isocyanat-Einheit oder ein Halogenatom aufweisen,
zu wasserlöslichen Kondensationsprodukten, die in 20 gew.-%iger wäßriger Lösung bei 20°C eine Viskosität von mindestens 100 mPas haben.

Die Kondensationsprodukte werden als Entwässerungs-, Flockungs- und Retentionsmittel bei der Herstellung von Papier verwendet.

Der vorliegenden Erfindung liegt die Aufgabe zugrunde, Pigmentanschlämmungen zur Verfügung zu stellen, die Dispergiermittel enthalten, die die Wirksamkeit von Retentions- und Entwässerungsmitteln bei der Herstellung von füllstoffhaltigen Papieren nicht negativ beeinträchtigen oder sie gegebenenfalls sogar verstärken.

Die Aufgabe wird erfindungsgemäß gelöst mit wäßrigen Pigmentanschlämmungen, die bis zu 80 Gew.-% eines feinteiligen Pigments dispergiert und 0,1 bis 5 Gew.- mindestens eines Dispergiermittels enthalten, wenn als Dispergiermittel Reaktionsprodukte eingesetzt werden, die erhältlich sind durch Umsetzung von
(a) Polyalkylenpolyaminen, Polyamidoaminen, mit Ethylenimin gepfropften Polyamidoaminen, Polyetheraminen sowie Mischungen der genannten Verbindungen mit
(b) monoethylenisch ungesättigten Carbonsäuren, Salzen, Estern, Amiden oder Nitrilen von monoethylenisch ungesättigten Carbonsäuren, Chlorcarbonsäuren und/oder Glycidylverbindungen der Formel 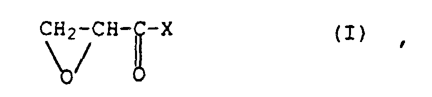 in der
   X = -NH₂, -OMe, -OR
   Me= H, Na, K, Ammonium und
   R = C₁- bis C₄-Alkyl oder C₂- bis C₄-Hydroxyalkyl bedeuten, und gegebenenfalls
(c) mindestens bifunktionellen Vernetzern, die als funktionelle Gruppe eine Halogenhydrin-, Glycidyl-, Aziridin- oder Isocyanat-Einheit oder ein Halogenatom aufweisen,
zu wasserlöslichen Kondensationsprodukten, die in 20 gew.-%iger wäßriger Lösung bei 20°C eine Viskosität von mindestens 100 mPas haben.

Die Pigmentanschlämmungen werden hergestellt, indem man Pigmente in Gegenwart der Dispergiermittel und Wasser mahlt oder feinteilige Pigmente in Gegenwart der Dispergiermittel in Wasser dispergiert. Die so erhältlichen wäßrigen Pigmentanschlämmungen werden als Zusatz zum Papierstoff bei der Herstellung von füllstoffhaltigem Papier verwendet.

Als Pigmente kommen alle üblicherweise in der Papierindustrie einsetzbaren Pigmente in Betracht, z.B. Calciumcarbonat (in Form von Kalk, Kreide oder gefällter Kreide), Talkum, Kaolin, Bentonit, Satinweiß, Calciumsulfat und Titandioxid. Bei den Pigmenten kann es sich sowohl um Füllstoffpigmente als auch um Streichpigmente handeln. Der Teilchendurchmesser der Pigmenteliegt vorzugsweise unterhalb von 2 µm für 40 bis 90 % der Pigmentteilchen.

Die Herstellung der wäßrigen Pigmentanschlämmungen erfolgt in der Regel bei Raumtemperatur in üblichen Vorrichtungen, z.B. in einem Dissolver oder einer Caddy-Mill. Da während des Dispergiervorgangs hohe Scherkräfte auf die Mischung aus Pigment, Wasser und Dispergiermittel einwirken, kann die Temperatur der Pigmentanschlämmungen bei der Herstellung ansteigen.

Wäßrige Pigmentanschlämmungen sind auch dadurch erhältlich, daß man grobteilige Pigmente in Gegenwart von Dispergiermittel und Wasser mahlt. Diese Herstellungsvariante von wäßrigen Pigmentanschlämmungen hat vor allem Bedeutung für die Herstellung hochkonzentrierter Kreide-Slurries.

Als Dispergiermittel werden erfindungsgemäß wasserlösliche Kondensationsprodukte aus den oben angegebenen Komponenten (a) und (b) sowie gegebenenfalls (c) eingesetzt. Zur Herstellung der Dispergiermittel verwendet man z.B. als Komponente (a) Polyalkylenpolyamine. Unter Polyalkylenpolyaminen sollen im vorliegenden Zusammenhang Verbindungen verstanden werden, die mindestens 3 Stickstoffatome enthalten, z.B. Diethylentriamin, Triethylentetramin, Tetraethylenpentamin, Pentaethylenhexamin, Diaminopropylethylendiamin, Trisaminopropylamin und Polyethylenimine. Die Polyethylenimine haben vorzugsweise eine mittlere Molmasse (M_{w}) von mindestens 300. Die mittlere Molmasse der Polyethylenimine kann bis zu 1000000 betragen. Technisch von besonderem Interesse ist der Einsatz von Polyethyleniminen mit mittleren Molmassen von 1200 bis 30000.

Weitere geeignete Verbindungen der Gruppe (a) sind Polyamidoamine. Man erhält sie beispielsweise bei der Umsetzung von Dicarbonsäuren mit 4 bis 10 Kohlenstoffatomen mit Polyalkylenpolyaminen, die vorzugsweise 3 bis 10 basische Stickstoffatome im Molekül enthalten. Geeignete Dicarbonsäuren sind beispielsweise Bernsteinsäure, Maleinsäure, Adipinsäure, Glutarsäure, Korksäure, Sebacinsäure oder Terephthalsäure. Man kann auch Mischungen aus Carbonsäuren einsetzen, z.B. Mischungen aus Adipinsäure und Glutarsäure oder Maleinsäure und Adipinsäure. Bevorzugt verwendet man Adipinsäure zur Herstellung der Polyamidoamine. Geeignete Polyalkylenpolyamine, die mit den Dicarbonsäuren kondensiert werden, wurden oben bereits genannt, z.B. Diethylentriamin, Triethylentetramin, Dipropylentriamin, Tripropylentetramin, Dihexamethylentriamin, Aminopropylethylendiamin und Bis-Aminopropylethylendiamin. Die Polyalkylenpolyamine können auch in Form von Mischungen bei der Herstellung der Polyamidoamine eingesetzt werden. Die Herstellung der Polyamidoamine erfolgt vorzugsweise in Substanz, kann jedoch auch gegebenenfalls in inerten Lösemitteln vorgenommen werden. Die Kondensation der Dicarbonsäuren mit den Polyalkylenpolyaminen wird bei höheren Temperaturen, z.B. in dem Bereich von 120 bis 220°C durchgeführt. Das bei der Reaktion gebildete Wasser wird aus dem Reaktionsgemisch abdestilliert. Die Kondensation kann gegebenenfalls auch in Gegenwart von Lactonen oder Lactamen von Carbonsäuren mit 4 bis 8 Kohlenstoffatomen vorgenommen werden. Pro Mol Dicarbonsäure verwendet man üblicherweise 0,8 bis 1,4 Mol eines Polyalkylenpolyamins. Die so erhältlichen Polyamidoamine weisen primäre und sekundäre NH-Gruppen auf und sind in Wasser löslich.

Als Komponente (a) kommen außerdem mit Ethylenimin gepfropfte Polyamidoamine in Betracht. Produkte dieser Art sind dadurch herstellbar, daß man Ethylenimin in Gegenwart von Säuren oder Lewis-Säuren, z.B. Schwefelsäure, Phosphorsäure oder Bortrifluoridetherat, auf die oben beschriebenen Polyamidoamine einwirken läßt. Unter den geschilderten Bedingungen wird Ethylenimin auf das Polyamidoamin aufgepfropft. Beispielsweise kann man pro basischer Stickstoffgruppierung im Polyamidoamin 1 bis 10 Ethylenimineinheiten aufpfropfen, d.h. auf 100 Gewichtsteile eines Polyamidoamins setzt man etwa 10 bis 500 Gewichtsteile Ethylenimin ein.

Weitere geeignete Verbindungen der Gruppe (a) sind Polyetheramine. Verbindungen dieser Art sind beispielsweise aus der DE-C-2 916 356 bekannt. Wie dort angegeben ist, erhält man Polyetheramine durch Kondensieren von Di- und Polyaminen mit Chlorhydrinethern bei höheren Temperaturen. Die Polyamine können bis zu 10 Stickstoffatome enthalten. Die Chlorhydrinether werden beispielsweise durch Umsetzung von zweiwertigen Alkoholen mit 2 bis 5 Kohlenstoffatomen, den Alkoxilierungsprodukten dieser Alkohole mit bis zu 60 Alkylenoxideinheiten, Glycerin oder Polyglycerin, das bis zu 15 Glycerineinheiten enthält, Erythrit oder Pentaerythrit mit Epichlorhydrin hergestellt. Pro Mol eines der genannten Alkohole setzt man mindestens 2 bis 8 Mol Epichlorhydrin ein. Die Umsetzung der Di- und Polyamine mit den Chlorhydrinethern wird üblicherweise bei Temperaturen von 10 bis 200°C durchgeführt.

Polyetherpolyamine werden außerdem durch Kondensieren von Diethanolamin oder Triethanolamin nach bekannten Verfahren erhalten, vgl. US-A-4 404 362, US-A-4 459 220 und US-A-2 407 895.

Die oben beschriebenen Polyalkylenpolyamine können partiell amidiert sein. Produkte dieser Art werden beispielsweise durch Reaktion von Polyalkylenpolyaminen mit Carbonsäuren, Carbonsäureestern, Carbonsäureanhydriden oder Carbonsäurehalogeniden hergestellt. Die Polyalkylenpolyamine werden für die nachfolgenden Reaktionen vorzugsweise zu 1 bis 30, meistens nur bis zu 20 % amidiert. Die amidierten Polyalkylenpolyamine müssen nämlich noch freie NH-Gruppen aufweisen, damit sie mit den Verbindungen (b) und gegebenenfalls (c) umgesetzt werden können. Für die Amidierung der Polyalkylenpolyamine kann man beispielsweise Carbonsäuren mit 1 bis 28 Kohlenstoffatomen einsetzen. Geeignete Carbonsäuren sind beispielsweise Ameisensäure, Essigsäure, Propionsäure, Benzoesäure, Laurinsäure, Palmitinsäure, Stearinsäure, Ölsäure, Linolsäure und Behensäure. Eine Amidierung kann beispielsweise auch durch Umsetzung der Polyalkylenpolyamine mit Alkyldiketenen vorgenommen werden.

Die Polyalkylenpolyamine können auch in teilweise quaternierter Form als Verbindung der Gruppe (a) zum Einsatz gelangen. Geeignete Quaternierungsmittel sind beispielsweise Alkylhalogenide, wie Methylchlorid, Ethylchlorid, Butylchlorid, Epichlorhydrin, Hexylchlorid, Dimethylsulfat, Diethylsulfat und Benzylchlorid. Falls quaternierte Polyalkylenpolyamine als Verbindung der Gruppe (a) eingesetzt werden, beträgt der Grad der Quaternierung vorzugsweise 1 bis 30, üblicherweise nur bis zu 20 %, damit noch genügend freie NH-Gruppen für die Folgereaktionen zur Verfügung stehen.

Von den Verbindungen der Gruppe (a) verwendet man vorzugsweise Polyethylenimine eines mittleren Molekulargewichts von 1200 bis 30000, Polyamidoamine, die mit Ethylenimin gepfropft sind und bis maximal 20 % amidierte Polyethylenimine.

Geeignete monoethylenisch ungesättigte Carbonsäuren, die als Komponente (b) in Betracht kommen, haben beispielsweise 3 bis 18 Kohlenstoffatome im Molekül. Geeignete Verbindungen dieser Art sind beispielsweise Acylsäure, Methacrylsäure, Dimethacrylsäure, Ethylacrylsäure, Allylessigsäure, Vinylessigsäure, Maleinsäure, Fumarsäure, Itaconsäure, Methylenmalonsäure, Zitrakonsäure, Ölsäure und Linolensäure. Vorzugsweise werden aus dieser Gruppe von Säuren Acrylsäure, Methacrylsäure und Maleinsäure eingesetzt. Die Salze der monoethylenisch ungesättigten Carbonsäuren, die ebenfalls als Verbindungen der Gruppe (b) in Betracht kommen, leiten sich von den Alkalimetall-, Erdalkalimetall- und Ammoniumsalzen der genannten Säuren ab. Praktische Bedeutung haben vor allem die Natrium-, Kalium- und Ammoniumsalze. Die Ammoniumsalze können sich sowohl von Ammoniak als auch von Aminen oder Aminderivaten wie Ethanolamin, Diethanolamin und Triethanolamin ableiten. Von den Erdalkalisalzen kommen vor allem Magnesium- und Calciumsalze der monoethylenisch ungesättigten Carbonsäuren in Betracht.

Die Ester der monoethylenisch ungesättigten Carbonsäuren leiten sich beispielsweise von einwertigen Alkoholen mit 1 bis 20 C-Atomen oder zweiwertigen Alkoholen mit 2 bis 6 Kohlenstoffatomen ab, z.B. Acrylsäuremethylester, Acrylsäureethylester, Acrylsäure-n-propylester, Acrylsäureisopropylester, Acrylsäure-n-butylester, Acrylsäureisobutylester, Methacrylsäuremethylester, Methacrylsäureethylester, Methacrylsäureisopropylester, Methacrylsäure-n-butylester, 2-Ethylhexylacrylat, 2-Ethylhexylmethacrylat, Palmitylacrylat, Laurylacrylat, Diarylacrylat, Laurylmethacrylat, Palmitylmethacrylat und Stearylmethacrylat, Dimethylmaleinat, Diethylmaleinat, Isopropylmaleinat, 2-Hydroxyethylacrylat, 2-Hydroxyethylmethacrylat, 2-Hydroxypropylacrylat, 3-Hydroxypropylacrylat, 2-Hydroxypropylmethacrylat, 3-Hydroxypropylmethacrylat, Hydroxybutylacrylat, Hydroxybutylmethacrylat und Hydroxyhexylacrylat und -methacrylat.

Geeignete Amide monoethylenisch ungesättigter Carbonsäuren sind beispielsweise Acrylamid, Methacrylamid und Ölsäureamid. Von den Nitrilen monoethylenisch ungesättigter Carbonsäuren kommen insbesondere Acrylnitril und Methacrylnitril in Betracht.

Geeignete Chlorcarbonsäuren der Gruppe (b) sind beispielsweise Chloressigsäure, 2-Chlorpropionsäure, 2-Chlorbuttersäure, Dichloressigsäure und 2,2'-Dichlorpropionsäure.

Als Verbindungen der Gruppe (b) kommen außerdem Glycidylverbindungen in Betracht, die mit Hilfe der Formel 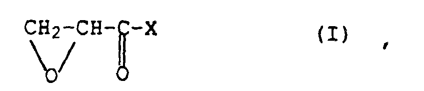 in der
X = -NH₂, -OMe, -OR
Me= H, Na, K, Ammonium und
R = C₁- bis C₄-Alkyl oder C₂- bis C₄-Hydroxyalkyl bedeuten,
charakterisiert werden können. Einzelne Verbindungen der Formel I sind beispielsweise Glycidylsäure, ihre Natrium-, Kalium-, Ammonium-, Magnesium- oder Calciumsalze, Glycidylsäureamid und Glycidylsäureester wie Glycidylsäuremethylester, Glycidylsäureethylester, Glycidylsäure-n-propylester, Glycidylsäure-n-butylester, Glycidylsäureisobutylester, Glycidylsäure-2-ethylhexylester, Glycidylsäure-2-hydroxypropylester und Glycidylsäure-4-hydroxybutylester. Von den Verbindungen der Formel I kommen vorzugsweise Glycidylsäure, ihre Natrium-, Kalium- oder Ammoniumsalze oder Glycidylsäureamid in Betracht.

Bevorzugt eingesetzte Verbindungen der Gruppe (b) sind Acrylsäure, Methacrylsäure und Maleinsäure oder auch Mischungen aus Acrylsäure und Maleinsäure oder Methacryläure und Maleinsäure in jeweils beliebigen Verhältnissen.

Als Verbindungen der Gruppe (c) kommen mindestens bifunktionelle Vernetzer in Betracht, die als funktionelle Gruppe eine Halogenhydrin-, Glycidyl-, Aziridin- oder Isocyanat-Einheit oder ein Halogenatom aufweisen. Geeignete Vernetzer sind beispielsweise Epihalogenhydrine, insbesondere Epichlorhydrin, sowie α,ω-Bis-(chlorhydrin)polyalkylenglykolether und die daraus durch Behandlung mit Basen erhältlichen α,ω-Bis(epoxyde) von Polyalkylenglykolethern. Die Chlorhydrinether werden beispielsweise dadurch hergestellt, daß man Polyalkylenglykole im Molverhältnis 1 zu mindestens 2 bis 5 mit Epichlorhydrin umsetzt. Geeignete Polyalkylenglykole sind beispielsweise Polyethylenglykol, Polypropylenglykol und Polybutylenglykole sowie Blockcopolymerisate von C₂- bis C₄-Alkylenoxyden. Die mittleren Molmassen (M_{w}) der Polyalkylenglykole betragen z.B. 200 bis 6000 und liegen vorzugsweise in dem Bereich von 300 bis 2000 g/mol. α,ω-Bis(chlorhydrin)polyalkylenglykolether dieser Art werden beispielsweise in der US-A-4 144 123 beschrieben. Wie darin ebenfalls angegeben ist, entstehen aus den Dichlorhydrinethern durch Behandlung mit Basen die entsprechenden Bisglycidylether.

Außerdem eignen sich als Vernetzer α,ω-Dichlorpolyalkylenglykole, die beispielsweise als Vernetzer aus der EP-B-0 025 515 bekannt sind. Sie sind dadurch erhältlich, daß man zwei- bis vierwertige Alkohole, vorzugsweise alkoxylierte zwei- bis vierwertige Alkohole entweder
1. mit Thionylchlorid unter HCl-Abspaltung und nachfolgender katalytischer Zersetzung der chlorsulfonierten Verbindungen unter Schwefeldioxidabspaltung umsetzt oder
2. mit Phosgen unter HCl-Abspaltung in die entsprechenden Bis-Chlorkohlensäureester überführt und daraus anschließend durch katalytische Zersetzung unter Kohlendioxidabspaltung α,ω-Dichlorether erhält.

Als Alkoholkomponente werden vorzugsweise ethoxylierte und/oder propoxylierte Glykole eingesetzt, die mit 1 bis 100, insbesondere 4 bis 40 Mol Ethylenoxid pro Mol Glykol zur Reaktion gebracht werden.

Andere geeignete Vernetzer sind α,ω- oder vicinale Dichloralkane, beispielsweise 1,2-Dichlorethan, 1,2-Dichlorpropan, 1,3-Dichlorpropan, 1,4-Dichlorbutan und 1,6-Dichlorhexan. Beispiele für weitere Vernetzer sind die Umsetzungsprodukte von mindestens dreiwertigen Alkoholen mit Epichlorhydrin zu Reaktionsprodukten, die mindestens zwei Chlorhydrin-Einheiten aufweisen, z.B. verwendet man als mehrwertige Alkohole Glycerin, ethoxilierte oder propoxilierte Glycerine, Polyglycerine mit 2 bis 15 Glycerin-Einheiten im Molekül sowie gegebenenfalls ethoxilierte und/oder propoxilierte Polyglycerine. Vernetzer dieser Art sind beispielsweise aus der DE-C-2 916 356 bekannt. Außerdem eignen sich Vernetzer, die blockierte Isocyanat-Gruppen enthalten, z.B. Trimethylhexamethylendiisocyanat blockiert mit 2,2,3,6-Tetramethylpiperidinon-4. Solche Vernetzer sind bekannt, vgl. beispielsweise DE-A-4 028 285, sowie Aziridin-Einheiten enthaltende Vernetzer auf Basis von Polyethern oder substituierten Kohlenwasserstoffen, z.B. 1,6-Bis-N-aziridinohexan, vgl. US-A-3 977 923. Es ist selbstverständlich auch möglich, Mischungen aus zwei oder mehreren Vernetzern zur Molekulargewichtserhöhung zu verwenden.

Die wasserlöslichen Kondensationsprodukte, die erfindungsgemäß als Dispergiermittel in wäßrigen Pigmentanschlämmungen enthalten sind, sind dadurch herstellbar, daß man die Verbindungen der Gruppe (a) mit den Verbindungen der Gruppen (b) und gegebenenfalls (c) umsetzt. Diese Umsetzung kann in der Weise durchgeführt werden, daß man zunächst die Verbindungen der Gruppen (a) und (b) zur Reaktion bringt und erst danach die Verbindungen der Gruppe (c) zusetzt. Man kann jedoch auch die Verbindungen (b) und (c) gleichzeitig mit den Verbindungen (a) umsetzen. Wirksame Dispergiermittel werden bereits bei der Umsetzung der Verbindungen (a) mit (b) erhalten. Diese Reaktionsprodukte können - wie oben ausgeführt - gegebenenfalls durch Umsetzung mit den Vernetzern (c) modifiziert werden. Bei der zweistufigen und bei der einstufigen Reaktionsführung d.h. die Umsetzung von (a) mit (b) sowie im Fall der wahlweisen Mitverwendung von (c) die Umsetzung von (a), (b) und (c), arbeitet man in der Regel - damit die Reaktionen ausreichend schnell ablaufen - bei höheren Temperaturen, z.B. in dem Temperaturbereich von 10 bis 200°C, vorzugsweise 30 bis 100°C. Bei der Umsetzung entstehen wasserlösliche Kondensationsprodukte, die in 20 gew.-%iger wäßriger Lösung bei 20°C eine Viskosität von mindestens 100 mPas haben. Die Viskosität der erfindungsgemäßen Kondensationsprodukte kann bis zu 100 Pas betragen und liegt vorzugsweise in dem Bereich von 200 bis 2000 mPas (gemessen in 20 gew.-%iger wäßriger Lösung bei 20°C).

Die Komponenten (a), (b) und gegebenenfalls (c) können in beliebigen Verhältnissen eingesetzt werden. Um jedoch direkt anwendbare wasserlösliche Kondensationsprodukte zu erhalten, setzt man die Verbindungen (a) und (b) in einem solchen Verhältnis ein, daß in dem Umsetzungsprodukt aus (a) und (b) noch 20 bis 99, vorzugsweise 30 bis 85 % der primären und sekundären Aminogruppen von (a) unverändert bleiben. Falls die Verbindungen (c) eingesetzt werden, beträgt das Verhältnis (a) : (c) von 1:0,001 bis 1:10, vorzugsweise 1:0,05 bis 1:2.

Bei dem Verfahren zur Herstellung der wasserlöslichen Kondensationsprodukte setzt man gemäß einer Ausführungsform die Verbindungen der Gruppe (a) mit den Verbindungen der Gruppe (b) um und läßt die Umsetzungsprodukte anschließend mit den Verbindungen (c) zu wasserlöslichen Kondensationsprodukten abreagieren, die in 20 gew.-%iger wäßriger Lösung bei 20°C eine Viskosität von mindestens 100 mPas haben. Die Verbindungen (b) und (c) können jedoch auch gleichzeitig mit den Verbindungen der Gruppe (a) umgesetzt werden. Diejenigen Verbindungen der Gruppe (b), die eine monoethylenisch ungesättigte Doppelbindung enthalten, reagieren bei beiden Verfahrensvarianten mit den Verbindungen der Gruppe (a) nach Art einer Michael-Addition, während Chlorcarbonsäuren und die obengenannten Glycidylverbindungen der Formel I über die Chlorgruppe oder die Epoxidgruppe mit den primären oder sekundären Aminogruppen der Verbindungen der Gruppe (a) reagieren.

Bevorzugt sind wäßrige Pigmentanschlämmungen, die als Dispergiermittel Reaktionsprodukte enthalten, die durch Umsetzung von
(a) Polyethyleniminen mit mittleren Molmassen von 1200 bis 30 000 mit
(b) Acrylsäure, Methacrylsäure, Maleinsäure und/oder Itaconsäure
in einem solchen Verhältnis herstellbar sind, daß in den Umsetzungsprodukten aus (a) und (b) noch 20 bis 99 % der primären und sekundären Aminogruppen der Polyethylenimine unverändert bleiben und wobei die Umsetzungsprodukte aus (a) und (b) gegebenenfalls durch Reaktion mit
(c) Epichlorhydrin, Bis-Epoxiden oder Bis-chlorhydrinethern von Polyethylenoxiden und/oder Polypropylenoxiden mit jeweils mittleren Molmassen von etwa 200 bis 2000 im Gewichtsverhältnis (a) : (c) von 1 : 0,01 bis 1 : 10 modifiziert sind.

Die wäßrigen Pigmentschlämmungen enthalten die oben beschriebenen Kondensationsprodukte aus den Komponenten (a) und (b) und gegebenenfalls (c) in Mengen von 0,1 bis 5, vorzugsweise 0,2 bis 2 Gew.-%. Die wäßrigen Pigmentanschlämmungen werden dem Papierstoff vor der Blattbildung in einer solchen Menge zugesetzt, daß füllstoffhaltige Papiere entstehen, die 2 bis 50, vorzugsweise 5 bis 30 Gew.-% mindestens eines Pigments enthalten. Die Herstellung von füllstoffhaltigen Papieren erfolgt vorzugsweise noch zusätzlich in Gegenwart von Retentionsmitteln, die in üblichen Mengen angewendet werden. Als Retentionsmittel werden vorzugsweise hochmolekulare anionische Polyacrylamide eingesetzt. Der Einsatz der wäßrigen Pigmentanschlämmungen als Zusatz zum Papierstoff bei der Herstellung von füllstoffhaltigem Papier bewirkt eine Erhöhung der Entwässerungsgeschwindigkeit und eine Erhöhung der Retention gegenüber der Zugabe von dispergiermittelfreien Pigmentanschlämmungen und von Pigmentanschlämmungen, die eine niedrigmolekulare Polyacrylsäure als Dispergiermittel enthalten.

Die erfindungsgemäßen wäßrigen Pigmentanschlämmungen können zur Herstellung sämtlicher füllstoffhaltiger Papier-, Pappe- und Kartonqualitäten eingesetzt werden, z.B. Papiere für den Zeitungsdruck, sogenannten mittelfeine Schreib- und Druckpapiere, Naturtiefdruckpapiere und leichtgewichtige Streichrohpapiere. Zur Herstellung solcher Papiere verwendet man als Hauptrohstoffkomponente Holzschliff, thermomechanischen Stoff (TMP), chemo-thermomechanischen Stoff (CTMP), Druckschliff (PGW) sowie Sulfit- und Sulfatzellstoff.

Die in den Beispielen angegebenen Teile sind Gewichtsteile, die Angaben in % Gewichtsprozent.

### Beispiele

### Herstellung von Dispergiermitteln

### Dispergiermittel 1

387 g Polyethylenimin einer mittleren Molmasse von 25 000 und 387 g Wasser werden in einem 2 l fassenden Kolben, der mit Rührer und einer Vorrichtung für das Arbeiten unter Stickstoffatmosphäre ausgestattet ist vorgelegt, auf eine Temperatur von 80°C erwärmt, innerhalb von 2 Stunden bei dieser Temperatur mit 92,65 g Acrylsäure versetzt. Nach Zugabe der Acrylsäure wird das Reaktionsgemisch 3 Stunden bei 80°C gerührt. Man erhält eine wäßrige Lösung mit einem Feststoffgehalt von 53 %. Bei den hier eingesetzten Verhältnissen wurde an 14,3 % der reaktiven Stickstoffatome im Polyethylenimin Acrylsäure addiert.

### Dispergiermittel 2

In der oben beschriebenen Apparatur wurden 395 g Polyethylenimin mit einer mittleren Molmasse von 25 000 und 920 g Wasser vorgelegt, auf eine Temperatur von 99°C erwärmt und bei dieser Temperatur innerhalb von 75 Minuten mit 189 g Acrylsäure versetzt. Das Reaktionsgemisch wird nach der Acrylsäurezugabe noch 3 Stunden bei 99°C unter einer Stickstoffatmosphäre gerührt. Bei den eingesetzten Verhältnissen wurde Acrylsäure an 28,6 % der reaktiven Stickstoffatome im Polyethylenimin addiert. Man erhielt 1501 g einer wäßrigen Lösung mit einem Feststoffgehalt von 39,3 %.

73 g der wäßrigen Lösung des oben beschriebenen Additionsproduktes von Acrylsäure an Polyethylenimin werden mit 185 g Wasser verdünnt, auf eine Temperatur von 70°C erwärmt und bei dieser Temperatur innerhalb von 2 Stunden portionsweise mit 288,3 ml einer 20,5 %igen wäßrigen Lösung des Bis-chlorhydrinethers eines Polyethylenglykols der mittleren Molmasse von 1500 versetzt. Danach wird durch Zugabe von 6 g 85 %iger Ameisensäure ein pH-Wert von 8 eingestellt. Man erhält 948 g einer 28,5 %igen wäßrigen Lösung des Dispergiermittels. Eine 20 %ige wäßrige Lösung hat bei 20°C eine Viskosität von 660 mPas (gemessen im Brookfield-Viskosimeter, Spindel 2).

### Dispergiermittel 3

In einem mit einem Rührer versehenen Kolben, der mit einer Vorrichtung für das Arbeiten unter einer Stickstoffatmosphäre ausgerüstet ist, legt man 831 g Polyethylenimin der mittleren Molmasse von 25 000 und 848 g Wasser vor, erhitzt das Gemisch auf eine Temperatur von 100°C und fügt bei dieser Temperatur innerhalb von 2 Stunden 278 g Acrylsäure zu. Nach der Zugabe der Acrylsäure wird das Reaktionsgemisch noch 3 Stunden bei 100°C gerührt. An 20 % der im Polyethylenimin enthaltenen primären und sekundären NH-Gruppen wurde Acrylsäure addiert. Man erhielt 1950 g einer wäßrigen Polymerlösung mit einem Feststoffgehalt von 54,8 %.

355 g der wäßrigen Lösung des oben beschriebenen Adduktes von Acrylsäure an Polyethylenimin werden in einem Kolben, der mit einem Rührer und einer Vorrichtung für das Arbeiten unter Stickstoff ausgestattet ist, mit 583 g Wasser verdünnt, auf eine Temperatur von 70°C erwärmt und innerhalb von 2 Stunden portionsweise bei dieser Temperatur mit 52 ml einer 21 %igen wäßrigen Lösung des Bis-Chlorhydrinethers von Polyethylenglykol der mittleren Molmasse 400 versetzt. Danach fügt man 23 g Ameisensäure zu und erhält 1009 g einer wäßrigen Lösung mit einem Feststoffgehalt von 20,7 %. Eine 20 %ige wäßrige Lösung hat bei 20°C eine Viskosität von 320 mPas (Brookfield-Viskosimeter, Spindel 2).

### Dispergiermittel 4

Zum Vergleich mit dem Stand der Technik wurde eine handelsübliche Lösung des Natriumsalzes einer niedrigmolekularen Polyacrylsäure (K-Wert (nach Fikentscher) = ca. 30) verwendet.

Bei der Papierherstellung wurden folgende Retentionsmittel eingesetzt.

### Retentionsmittel 1

Modifiziertes Polyamidoamin gemäß Beispiel 3 der DE-B-2 434 816, hergestellt durch Pfropfen eines Polyamidoamins aus Adipinsäure und Diethylentriamin mit Ethylenimin und Vernetzen des gepfropften Polyamidoamins mit α,ω-Dichlorhydrinether eines Polyethylenglykols.

### Retentionsmittel 2

Handelsübliche Wasser-in-Öl-Emulsion eines hochmolekularen Copolymerisats aus Acrylamid und Dimethylaminoethylacrylatmethochlorid.

### Retentionsmittel 3

Handelsübliche Wasser-in-Öl-Emulsion eines hochmolekularen Copolymerisats aus Acrylamid und Acrylsäure.

### Beispiele 1 bis 4

### Herstellung von Kreide-Slurries

### Allgemeine Vorschrift

In einem 800 ml fassenden Becherglas wurden 210 g Wasser und jeweils soviel einer wäßrigen Lösung der Dispergiermittel 1 bis 4 vorgelegt, daß die Menge an Dispergiermittel jeweils 0,3 bzw. 0,5 %, bezogen auf Kreide, betrug. Danach wurden unter Rühren mit einem Laborschnellrührer innerhalb von 10 Minuten 490 g einer feinteiligen Kreide (Kreide DX1 der Firma Omya) eingerührt. Nach Zugabe der gesamten Kreidemenge rührte man die Anschlämmungen jeweils 15 Minuten bei einer Drehzahl von 2500 Um/min und bestimmte dann die Viskosität der Anschlämmung (Brookfieldviskosimeter, Spindel 1, 20°C). Die Ergebnisse sind in Tabelle 1 angegeben.

**Tabelle 1**

| Beispiel | Vergl.-Beisp. | Dispergiermittel Nr. | Viskosität (mPa.s) | | |
|---|---|---|---|---|---|
| | | | 0,3 | | 0,5 |
| 1 | | 1 | 300 | | 170 |
| 2 | | 2 | 160 | | 220 |
| 3 | | 3 | 280 | | 225 |
| | 1 | 4 | 180 | | 162 |
| | 2 | - | | 5600 | |

Die oben angegebenen Kreide-Slurries wurden zur Herstellung von füllstoffhaltigem Papier eingesetzt und ihr Einfluß auf Retention und Entwässerung bestimmt. Hierzu verwendete man jeweils einen Papierstoff, bestehend aus 90 Teilen TMP, 10 Teilen gebleichtem Sulfatzellstoff und 40 Teilen Kreide aus den in den Tabellen 2 bis 4 angegebenen Kreideaufschlämmungen gemäß den Beispielen 1 bis 4. Man verwendete jeweils die in den Tabellen 2 bis 4 angegebenen Mengen an Retentionsmittel und führte die Blattbildung auf einem Schopper-Riegler-Gerät durch. Die in den Tabellen angegebenen Zeiten wurden nach dem Durchlauf von jeweils 700 ml Filtrat ermittelt. Außerdem ist in den Tabellen die optische Durchlässigkeit der erhaltenen Filtrate angegeben.

**Tabelle 2**

| Beispiel | Vergl. bsp. | | Entwässerungszeit (sek. für 700ml) | | | Optische Durchlässigkeit (%) | | |
|---|---|---|---|---|---|---|---|---|
| | | Retentionsmittel 1 (%) | 0 | 0,1 | 0,2 | 0 | 0,1 | 0,2 |
| | | Kreide dispergiert mit | | | | | | |
| 4 | - | 0,3% Dispergiermittel 1 | 82 | 48 | 44 | 19 | 41 | 48 |
| 5 | - | 0,5% Dispergiermittel 2 | 71 | 45 | 39 | 25 | 42 | 49 |
| 6 | - | 0,5% Dispergiermittel 3 | 74 | 45 | 38 | 35 | 51 | 56 |
| | 3 | 0,3% Dispergiermittel 4 | 88 | 83 | 72 | 6 | 11 | 21 |
| | 4 | ohne Dispergiermittel | 89 | 71 | 53 | 9 | 26 | 41 |

**Tabelle 3**

| Beispiel | Vergl. bsp. | | Entwässerungszeit (sek. für 700ml) | | | Optische Durchlässigkeit (%) | | |
|---|---|---|---|---|---|---|---|---|
| | | Retentionsmittel 2 (%) | 0 | 0,05 | 0,1 | 0 | 0,05 | 0,1 |
| | | Kreide dispergiert mit | | | | | | |
| 7 | - | 0,3% Dispergiermittel 1 | 82 | 61 | 52 | 19 | 45 | 56 |
| 8 | - | 0,5% Dispergiermittel 2 | 71 | 57 | 49 | 25 | 37 | 49 |
| 9 | - | 0,5% Dispergiermittel 3 | 74 | 61 | 51 | 35 | 45 | 55 |
| | 5 | 0,3% Dispergiermittel 4 | 88 | 72 | 66 | 6 | 17 | 28 |
| | 6 | ohne Dispergiermittel | 89 | 68 | 55 | 9 | 32 | 51 |

**Tabelle 4**

| Beispiel | Vergl. bsp. | | Entwässerungszeit (sek. für 700ml) | | | Optische Durchlässigkeit (%) | | |
|---|---|---|---|---|---|---|---|---|
| | | Retentionsmittel 3 (%) | 0 | 0,05 | 0,1 | 0 | 0,05 | 0,1 |
| | | Kreide dispergiert mit | | | | | | |
| 10 | - | 0,3% Dispergiermittel 1 | 82 | 96 | 94 | 19 | 21 | 30 |
| 11 | - | 0,5% Dispergiermittel 2 | 71 | 71 | 71 | 25 | 31 | 33 |
| 12 | - | 0,5% Dispergiermittel 3 | 74 | 74 | 77 | 35 | 37 | 41 |
| | 7 | 0,3% Dispergiermittel 4 | 88 | 88 | 87 | 6 | 17 | 24 |
| | 8 | ohne Dispergiermittel | 89 | 105 | 103 | 9 | 21 | 24 |

Wie aus den in den Tabellen 2 bis 4 angegebenen Werten für die Entwässerungszeit und optische Durchlässigkeit hervorgeht, wirken die erfindungsgemäß zu verwendenden Dispergiermittel zusätzlich als Retentions- und Entwässerungshilfsmittel.

## Patentansprüche (Patentansprüche für folgende(n) Vertragsstaat(en): AT, BE, CH, DE, DK, FR, GB, IT, LI, NL, PT, SE)

1. Wäßrige Pigmentanschlämmungen, die bis zu 80 Gew.-% eines feinteiligen Pigments dispergiert und 0,1 bis 5 Gew.-% mindestens eines Dispergiermittels enthalten, dadurch gekennzeichnet, daß als Dispergiermittel Reaktionsprodukte eingesetzt werden, die erhältlich sind durch Umsetzung von
(a) Polyalkylenpolyaminen, Polyamidoaminen, mit Ethylenimin gepfropften Polyamidoaminen, Polyetheraminen sowie Mischungen der genannten Verbindungen mit
(b) monoethylenisch ungesättigten Carbonsäuren, Salzen, Estern, Amiden oder Nitrilen von monoethylenisch ungesättigten Carbonsäuren, Chlorcarbonsäuren und/oder Glycidylverbindungen der Formel 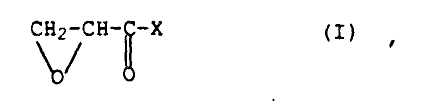 in der
X = -NH₂, -OMe, -OR
Me= H, Na, K, Ammonium und
R = C₁- bis C₄-Alkyl oder C₂- bis C₄-Hydroxyalkyl bedeuten,
und gegebenenfalls
(c) mindestens bifunktionellen Vernetzern, die als funktionelle Gruppe eine Halogenhydrin-, Glycidyl-, Aziridin- oder Isocyanat-Einheit oder ein Halogenatom aufweisen,
zu wasserlöslichen Kondensationsprodukten, die in 20 gew.-%iger wäßriger Lösung bei 20°C eine Viskosität von mindestens 100 mPas haben.

2. Wäßrige Pigmentanschlämmungen nach Anspruch 1, dadurch gekennzeichnet, daß die Dispergiermittel erhältlich sind durch Umsetzung von
(a) Polyethyleniminen mit mittleren Molmassen von 1200 bis 30 000 mit
(b) Acrylsäure, Methacrylsäure, Maleinsäure und/oder Itaconsäure in einem solchen Verhältnis, daß in den Umsetzungsprodukten aus (a) und (b) noch 20 bis 99 % der primären und sekundären Aminogruppen der Polyethylenimine unverändert bleiben und wobei die Umsetzungsprodukte aus (a) und (b) gegebenenfalls durch Reaktion mit
(c) Epichlorhydrin, Bis-Epoxiden oder Bis-chlorhydrinethern von Polyethylenoxiden und/oder Polypropylenoxiden mit jeweils mittleren Molmassen von etwa 200 bis 2000 im Gewichtsverhältnis (a) : (c) von 1 : 0,01 bis 1 : 10 modifiziert sind.

3. Verfahren zur Herstellung der wäßrigen Pigmentanschlämmungen nach Anspruch 1 oder 2, dadurch gekennzeichnet, daß man Pigmente in Gegenwart der Dispergiermittel und Wasser mahlt oder feinteilige Pigmente in Gegenwart der Dispergiermittel in Wasser dispergiert.

4. Verwendung der wäßrigen Pigmentanschlämmungen nach Anspruch 1 oder 2 als Zusatz zum Papierstoff bei der Herstellung von füllstoffhaltigem Papier.

## Patentansprüche (Patentansprüche für folgende(n) Vertragsstaat(en): ES)

1. Verfahren zur Herstellung von wäßrigen Pigmentanschlämmungen, die bis zu 80 Gew.-% eines feinteiligen Pigments dispergiert und 0,1 bis 5 Gew.-% mindestens eines Dispergiermittels enthalten, dadurch gekennzeichnet, daß als Dispergiermittel Reaktionsprodukte eingesetzt werden, die erhältlich sind durch Umsetzung von
(a) Polyalkylenpolyaminen, Polyamidoaminen, mit Ethylenimin gepfropften Polyamidoaminen, Polyetheraminen sowie Mischungen der genannten Verbindungen mit
(b) monoethylenisch ungesättigten Carbonsäuren, Salzen, Estern, Amiden oder Nitrilen von monoethylenisch ungesättigten Carbonsäuren, Chlorcarbonsäuren und/oder Glycidylverbindungen der Formel 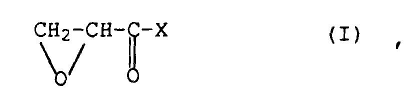 in der
X = -NH₂, -OMe, -OR
Me= H, Na, K, Ammonium und
R = C₁- bis C₄-Alkyl oder C₂- bis C₄-Hydroxyalkyl bedeuten,
und gegebenenfalls
(c) mindestens bifunktionellen Vernetzern, die als funktionelle Gruppe eine Halogenhydrin-, Glycidyl-, Aziridin- oder Isocyanat-Einheit oder ein Halogenatom aufweisen,
zu wasserlöslichen Kondensationsprodukten, die in 20 gew.-%iger wäßriger Lösung bei 20°C eine Viskosität von mindestens 100 mPas haben.

2. Verfahren nach Anspruch 1, dadurch gekennzeichnet, daß die Dispergiermittel erhältlich sind durch Umsetzung von
(a) Polyethyleniminen mit mittleren Molmassen von 1200 bis 30 000 mit
(b) Acrylsäure, Methacrylsäure, Maleinsäure und/oder Itaconsäure in einem solchen Verhältnis, daß in den Umsetzungsprodukten aus (a) und (b) noch 20 bis 99 % der primären und sekundären Aminogruppen der Polyethylenimine unverändert bleiben und wobei die Umsetzungsprodukte aus (a) und (b) gegebenenfalls durch Reaktion mit
(c) Epichlorhydrin, Bis-Epoxiden oder Bis-chlorhydrinethern von Polyethylenoxiden und/oder Polypropylenoxiden mit jeweils mittleren Molmassen von etwa 200 bis 2000 im Gewichtsverhältnis (a) : (c) von 1 : 0,01 bis 1 : 10 modifiziert sind.

3. Verfahren zur Herstellung der wäßrigen Pigmentanschlämmungen nach Anspruch 1 oder 2, dadurch gekennzeichnet, daß man Pigmente in Gegenwart der Dispergiermittel und Wasser mahlt oder feinteilige Pigmente in Gegenwart der Dispergiermittel in Wasser dispergiert.

4. Verwendung der nach dem Verfahren von Anspruch 1 bis 3 erhältlichen wäßrigen Pigmentanschlämmungen als Zusatz zum Papierstoff bei der Herstellung von füllstoffhaltigem Papier.

## Claims (Claims for the following Contracting State(s): AT, BE, CH, DE, DK, FR, GB, IT, LI, NL, PT, SE)

1. An aqueous pigment slurry which contains up to 80% by weight of a finely divided pigment in dispersed form and from 0.1 to 5% by weight of at least one dispersant, wherein the disperants used are reaction products which are obtainable by reacting
(a) polyalkylenepolyamines, polyamidoamines, polyamidoamines grafted with ethyleneimine, polyetheramines and mixtures of the stated compounds with
(b) monoethylenically unsaturated carboxylic acids, salts, esters, amides or nitriles of monoethylenically unsaturated carboxylic acids, chlorocarboxylic acids and/or glycidyl compounds of the formula 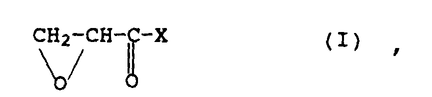 where
X is -NH₂, -OMe or -OR,
Me is H, Na, K or ammonium and
R is C₁-C₄-alkyl or C₂-C₄-hydroxyalkyl,
and, if required,
(c) bifunctional or polyfunctional crosslinking agents which have a halohydrin, glycidyl, aziridine or isocyanate unit or a halogen atom as a functional group,
to give water-soluble condensates which, in 20% strength by weight aqueous solution at 20°C, have a viscosity of at least 100 mPa.s.

2. An aqueous pigment slurry as claimed in claim 1, wherein the dispersants are obtainable by reacting
(a) polyethyleneimines having average molecular weights of from 1200 to 30 000 with
(b) acrylic acid, methacrylic acid, maleic acid and/or itaconic acid
in a ratio such that from 20 to 99% of the primary and secondary amino groups of the polyethyleneimines remain unchanged in the reaction products of (a) and (b), said reaction products being modified, if required, by reaction with
(c) epichlorohydrin, bisepoxides or bischlorohydrin ethers of polyethylene oxides and/or polypropylene oxides, each having an average molecular weight of from about 200 to 2000, in a weight ratio (a) : (c) of from 1 : 0.01 to 1 : 10.

3. A process for the preparation of an aqueous pigment slurry as claimed in claim 1 or 2, wherein a pigment is milled in the presence of the dispersants and water or a finely divided pigment is dispersed in water in the presence of the dispersants.

4. Use of an aqueous pigment slurry as claimed in claim 1 or 2 as an additive to paper stock in the production of filler-containing paper.

## Claims (Claims for the following Contracting State(s): ES)

1. A process for the preparation of an aqueous pigment slurry which contains up to 80% by weight of a finely divided pigment in dispersed form and from 0.1 to 5% by weight of at least one dispersant, wherein the disperants used are reaction products which are obtainable by reacting
(a) polyalkylenepolyamines, polyamidoamines, polyamidoamines grafted with ethyleneimine, polyetheramines and mixtures of the stated compounds with
(b) monoethylenically unsaturated carboxylic acids, salts, esters, amides or nitriles of monoethylenically unsaturated carboxylic acids, chlorocarboxylic acids and/or glycidyl compounds of the formula 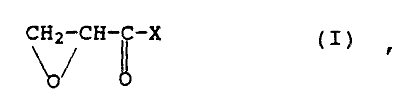 where
X is -NH₂, -OMe or -OR,
Me is H, Na, K or ammonium and
R is C₁-C₄-alkyl or C₂-C₄-hydroxyalkyl,
and, if required,
(c) bifunctional or polyfunctional crosslinking agents which have a halohydrin, glycidyl, aziridine or isocyanate unit or a halogen atom as a functional group,
to give water-soluble condensates which, in 20% strength by weight aqueous solution at 20°C, have a viscosity of at least 100 mPa.s.

2. A process as claimed in claim 1, wherein the dispersants are obtainable by reacting
(a) polyethyleneimines having average molecular weights of from 1200 to 30 000 with
(b) acrylic acid, methacrylic acid, maleic acid and/or itaconic acid
in a ratio such that from 20 to 99% of the primary and secondary amino groups of the polyethyleneimines remain unchanged in the reaction products of (a) and (b), said reaction products being modified, if required, by reaction with
(c) epichlorohydrin, bisepoxides or bischlorohydrin ethers of polyethylene oxides and/or polypropylene oxides, each having an average molecular weight of from about 200 to 2000, in a weight ratio (a) : (c) of from 1 : 0.01 to 1 : 10.

3. A process for the preparation of an aqueous pigment slurry as claimed in claim 1 or 2, wherein a pigment is milled in the presence of the dispersants and water or a finely divided pigment is dispersed in water in the presence of the dispersants.

4. Use of an aqueous pigment slurry obtainable by the process of any of claims 1 to 3 as an additive to paper stock in the production of filler-containing paper.

## Revendications (Revendications pour l'(les) Etat(s) contractant(s) suivant(s): AT, BE, CH, DE, DK, FR, GB, IT, LI, NL, PT, SE)

1. Suspensions aqueuses de pigments, qui contiennent en dispersion jusqu'à 80% en poids d'un pigment finement divisé et 0,1 à 5% en poids d'au moins un agent dispersif, caractérisées en ce que l'on utilise, à titre d'agents dispersifs, des produits de réaction que l'on peut obtenir par la conversion
(a) de polyalkylènepolyamines, de polyamidoamines, de polyamidoamines greffées d'éthylèneimine, de polyétheramines, ainsi que de mélanges des composés précités, avec
(b) des acides carboxyliques monoéthyléniquement insaturés, des sels, esters, amides ou nitriles d'acides carboxyliques monoéthyléniquement insaturés, des acides chlorocarboxyliques et/ou des composés glycidyliques de la formule 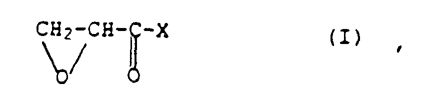 dans laquelle
X = -NH₂, -OMe, -OR
Me = H, Na, K, ammonium et
R = alkyle en C₁ à C₄, ou hydroxyalkyle en C₂ à C₄ et, éventuellement,
(c) des agents de réticulation au moins bifonctionnels, qui, à titre de radicaux fonctionnels, présentent une unité halogénhydrine, glycidyle, aziridine ou isocyanate, ou un atome d'halogène,
en produits de condensation solubles dans l'eau, qui possèdent, en solution aqueuse à 20% en poids et à 20°C, une viscosité d'au moins 100 mPas.

2. Suspensions aqueuses de pigments suivant la revendication 1, caractérisées en ce que les agents dispersifs peuvent s'obtenir par la conversion
(a) de polyéthylèneimines avec des masses molaires de 1200 à 30 000, avec
(b) l'acide acrylique, l'acide méthacrylique, l'acide maléique et/ou l'acide itaconique,
dans un rapport tel que dans les produits de conversion de (a) et de (b), subsistent encore 20 à 99% des radicaux amino primaires et secondaires des polyéthyléneimines et où les produits de conversion de (a) et de (b) sont éventuellement modifiés par réaction avec
(c) de l'épichlorhydrine, des bis-époxydes, ou des bis-chlorhydrineéthers de poly(oxydes d'éthylène) et/ou de poly(oxydes de propylène) avec à chaque fois des masses molaires moyennes d'environ 200 a 2000, dans le rapport pondéral (a):(c) de 1:0,01 à 1:10.

3. Procédé de préparation des suspensions aqueuses de pigments suivant la revendication 1 ou 2, caractérisé en ce que l'on broie les pigments en présence des agents dispersifs et d'eau, ou bien on disperse les pigments finement divisés en présence des agents dispersifs dans de l'eau.

4. Utilisation des suspensions aqueuses de pigments suivant la revendication 1 ou 2 à titre d'additifs pour la pâte à papier au cours de la fabrication de papier contenant une charge.

## Revendications (Revendications pour l'(les) Etat(s) contractant(s) suivant(s): ES)

1. Procédé de préparation de suspensions aqueuses de pigments, qui contiennent en dispersion jusqu'à 80% en poids d'un pigment finement divisé et 0,1 à 5% en poids d'au moins un agent dispersif, caractérisées en ce que l'on utilise, à titre d'agents dispersifs, des produits de réaction que l'on peut obtenir par la conversion
(a) de polyalkylénepolyamines, de polyamidoamines, de polyamidoamines greffées d'éthylèneimine, de polyétheramines, ainsi que de mélanges des composés précités, avec
(b) des acides carboxyliques monoéthyléniquement insaturés, des sels, esters, amides ou nitriles d'acides carboxyliques monoéthyléniquement insaturés, des acides chlorocarboxyliques et/ou des composés glycidyliques de la formule 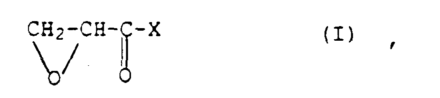 dans laquelle
X = -NH₂, -OMe, -OR
Me = H, Na, K, ammonium et
R = alkyle en C₁ à C₄, ou hydroxyalkyle en C₂ à C₄ et, éventuellement,
(c) des agents de réticulation au moins bifonctionnels, qui, à titre de radicaux fonctionnels, présentent une unité halogénhydrine, glycidyle, aziridine ou isocyanate, ou un atome d'halogène,
en produits de condensation solubles dans l'eau, qui possèdent, en solution aqueuse à 20% en poids et à 20°C, une viscosité d'au moins 100 mPas.

2. Procédé suivant la revendication 1, caractérisé en ce que les agents dispersifs peuvent s'obtenir par la conversion
(a) de polyéthylèneimines avec des masses molaires de 1200 à 30 000, avec
(b) l'acide acrylique, l'acide méthacrylique, l'acide maléique et/ou l'acide itaconique,
dans un rapport tel que dans les produits de conversion de (a) et de (b), subsistent encore 20 à 99% des radicaux amino primaires et secondaires des polyéthylèneimines et où les produits de conversion de (a) et de (b) sont éventuellement modifiés par réaction avec
(c) de l'épichlorhydrine, des bis-époxydes, ou des bis-chlorhydrineéthers de poly(oxydes d'éthylène) et/ou de poly(oxydes de propylène) avec à chaque fois des masses molaires moyennes d'environ 200 à 2000, dans le rapport pondéral (a):(c) de 1:0,01 à 1:10.

3. Procédé de préparation des suspensions aqueuses de pigments suivant la revendication 1 ou 2, caractérisé en ce que l'on broie les pigments en présence des agents dispersifs et d'eau, ou bien on disperse les pigments finement divisés en présence des agents dispersifs dans de l'eau.

4. Utilisation des suspensions aqueuses de pigments que l'on peut obtenir par mise en oeuvre du procédé suivant les revendications 1 à 3 à titre d'additifs pour la pâte à papier au cours de la fabrication de papier contenant une charge.
